(19) Europäisches Patentamt
European Patent Office
Office européen des brevets

(11) Veröffentlichungsnummer: **0 408 995 B1**

(12) # EUROPÄISCHE PATENTSCHRIFT

(45) Veröffentlichungstag der Patentschrift: **08.11.95**

(51) Int. Cl.[6]: **C09K 19/58**, C09K 19/02

(21) Anmeldenummer: **90112813.2**

(22) Anmeldetag: **05.07.90**

(54) **Flüssigkristallmedium mit geringer Temperaturabhängigkeit des d/p-Fensters.**

(30) Priorität: **17.07.89 DE 3923560**

(43) Veröffentlichungstag der Anmeldung:
**23.01.91 Patentblatt 91/04**

(45) Bekanntmachung des Hinweises auf die Patenterteilung:
**08.11.95 Patentblatt 95/45**

(84) Benannte Vertragsstaaten:
**DE GB**

(56) Entgegenhaltungen:
**EP-A- 0 211 646**
**DE-A- 2 827 471**
**DE-A- 3 934 328**
**DE-A- 4 007 039**

(73) Patentinhaber: **MERCK PATENT GmbH**
**Postfach,**
**Frankfurter Strasse 250**
**D-64271 Darmstadt (DE)**

(72) Erfinder: **Plach, Herbert, Dr.**
**Wingertsbergstrasse 5**
**D-6100 Darmstadt (DE)**
Erfinder: **Reiffenrath, Volker**
**Jahnstrasse 18**
**D-6101 Rossdorf (DE)**
Erfinder: **Hochgesand, Ralf**
**Dürrerstrasse 5 a**
**D-7500 Karlsruhe 31 (DE)**

EP 0 408 995 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein nematisches flüssigkristallines Medium mit positiver dielektrischer Anisotropie, enthaltend eine oder mehrere achirale Flüssigkristallverbindungen und eine Dotierkomponente und seine Verwendung in STN Displays.

Durch den Zusatz einer Dotierkomponente wird der nematischen Struktur des Mediums ein makroskopischer Twist aufgezwungen, der durch den Pitch p, d.h. die Strecke, entlang der die Helixachse um $2\pi$ gedreht wird, charakterisiert ist. Es gilt (bei Verwendung eines Dotierstoffs):

$$p = \frac{1}{HTP \cdot c} \qquad (1)$$

wobei HTP (Helical Twisting Power) das Drehvermögen und c die Konzentration des Dotierstoffs (d.h. der zugesetzten chiralen Verbindung) ist. Die Konzentration wird üblicherweise in Massenprozenten angegeben, so daß HTP die Dimension einer reziproken Länge hat.

Nematische flüssigkristalline Medien mit großem Pitch, d.h. kleiner HTP und geringer Konzentration c der Dotierkomponente, werden z.B. in Standard-TN-Flüssigkristallanzeigen mit einem Twistwinkel von $\phi \cong \pi/4$ zur Unterdrückung von "reversed-twist"-Defekten verwendet.

Weitere wichtige Anwendungen für eine Dotierkomponente enthaltende flüssigkristalline Medien sind z.B. phase change-Flüssigkristallanzeigen und als Temperatursensoren verwendete Flüssigkristallanzeigen, wobei diese Aufzählung die Erfindung nur erläutern und nicht begrenzen soll.

Eine insbesondere für die Auslegung von STN-Flüssigkristallanzeigen wichtige Größe ist der Quotient aus Zelldicke und Pitch d/p
So werden in STN-Flüssigkristallanzeigen bei angelegter Spannung Störungen beobachtet, die unter dem Mikroskop wie mehr oder weniger parallele Streifen aussehen und deshalb als "striped domains" bezeichnet werden, falls d/p zu groß gewählt wird.

Ist andererseits der Quotient d/p zu klein, wird der Twistwinkel um $\pi$ kleiner als erwünscht ("-$\pi$-domain"). Um eine domänenfreie Anzeige zu erhalten, muß für eine bestimmte STN-Flüssigkristallanzeige und ein bestimmtes nematisches flüssigkristallines Medium der Quotient d/p innerhalb eines definierten Intervalls $\Delta d/p$, des sogenannten d/p-Fensters liegen.

Der Pitch p, der Zellabstand d und damit der Quotient d/p ist ebenso wie das d/p-Fenster $\Delta_p^d$ temperaturabhängig. Der Arbeitstemperaturbereich, in dem die Flüssigkristallanzeige domänenfrei betrieben werden kann, ist dadurch begrenzt, daß stets die Bedingung

$$(d/p)_{min}\,(T) < d/p\,(T) < (d/p)_{max}\,(T)$$

erfüllt sein muß.

Zur Erweiterung des Arbeitstemperaturbereiches ist vorgeschlagen worden, die Temperaturabhängigkeit des Pitches p des flüssigkristallinen Mediums durch Verwendung von 2 Dotierstoffen mit unterschiedlicher Temperaturabhängigkeit von p weitgehend zu kompensieren (z.B. US 4,780,240; F. Moia, New Liquid Crystal Mixtures for Supertwisted LCDs with Low Tendency for Fingerprint Textures, Freiburger Arbeitstagung "Liquid Crystals" 1989).

Dieser Lösungsansatz berücksichtigt jedoch nicht, daß nicht nur d/p, sondern auch das d/p-Fenster $\Delta d/p$ temperaturabhängig ist. Der Vorschlag stellt somit keine allgemein gültige Handlungsanweisung zur Erweiterung des Arbeitstemperaturbereichs dar. Er muß insbesondere versagen, wenn

- das d/p-Fenster $\Delta d/p$ klein ist und/oder mit steigender Temperatur stark abnimmt,
- der Pitch eine deutlich geringere Temperaturabhängigkeit $\frac{dp}{dT}$ aufweist als das d/p-Fenster $\frac{d}{dT}$ ($\Delta_p^d$ ) und/oder der minimale oder maximale d/p-Wert $\frac{d}{dT}$ $(d/p)_{min}$ oder $\frac{d}{dT}$ $(d/p)_{max}$.

Wegen der großen Bedeutung von eine Dotierkomponente enthaltenden flüssigkristallinen Medien, insbesondere auch für STN-Flüssigkristallanzeigen, bestand daher ein großes Bedürfnis, nematische flüssigkristalline Medien aufzufinden, die durch einen großen Arbeitstemperaturbereich gekennzeichnet sind und die nicht die oben angeführten Nachteile aufweisen.

Der Erfindung lag daher die Aufgabe zugrunde, nematische flüssigkristalline Medien mit positiver dielektrischer Anisotropie, enthaltend eine oder mehrere achirale Flüssigkristallverbindungen und eine Dotierkomponente, bereitzustellen, bei denen unter Berücksichtigung der Temperaturabhängigkeit des d/p-Fensters $\Delta d/p$ ein möglichst großer Arbeitstemperaturbereich erzielt wird.

Überraschenderweise wurde nun gefunden, daß diese Aufgabe durch Bereitstellung der erfindungsgemäßen nematischen flüssigkristallinen Medien gelöst werden kann.

Gegenstand der Erfindung ist somit ein nematisches flüssigkristlalines Medium mit positiver dielektrischer Anisotropie, enthaltend eine oder mehrere achirale Flüssigkristallverbindungen und eine Dotierkomponente, wobei für die Dotierkomponente ein oder mehrere Dotierstoffe so gewählt werden, daß das Medium bei Verwendung in einer zur Ermittlung des d/p-Fensters $\Delta_p^d$ (T) geeigneten Testzelle eine geringe Temperaturahhängigkeit des d/p-Fensters $d[\Delta(d/p)]/dT$ aufweist.

Die mittlere Temperaturabhängigkeit $\Delta[\Delta(d/p)]\Delta T$ im Temperaturintervall zwischen 20° und 60 °C ist bevorzugt kleiner als $5 \cdot 10^{-3}$ $K^{-1}$.

Die Temperatur des Koaleszenzpunktes $T_K$, an dem das d/p-Fenster verschwindet, ist bevorzugt größer als 60 °C und liegt insbesondere über dem Klärpunkt $T_C$ des flüssigkristallinen Mediums.

Die Temperaturabhängigkeit der Helical Twisting Power HTP und die Konzentration der Dotierstoffe werden bevorzugt so gewählt, daß die Temperaturabhängigkeit des d/p-Wertes des Mediums optimal an die Temperaturabhängigkeit des d/p-Fensters angepaßt ist.

Die Temperatur, bei der der d/p-Wert des Mediums kleiner als $(d/p)_{min}$ oder größer als $(d/p)_{max}$ ist, ist vorzugsweise größer als 60 °C.

Flüssigkristalline Medien, deren d/p-Wert bei der Koaleszenztemperatur $T_K$ sich vom d/p-Wert des Koaleszenzpunktes um höchstens +0,1 oder -0,1 unterscheidet und deren d/p-Wert bei Raumtemperatur innerhalb des d/p-Fensters bei dieser Temperatur liegt, sind bevorzugt.

Als Dotierkomponente wird insbesondere ein chiraler Dotierstoff mit einer mittleren Temperaturabhängigkeit der Helical Twisting Power $\Delta HTP/\Delta T$ verwendet, die im Temperaturintervall zwischen 20 °C und 60 °C kleiner als $5 \cdot 10^{-1}$ $\mu m^{-1}$ $K^{-1}$ ist.

Die Verwendung von 2 chiralen Dotierstoffen ist bevorzugt.

Die Dotierkomponente enthält bevorzugt mindestens einen chiralen Dotierstoff der Formel I,

$R^1\text{-CO-O-CHR}^0\text{-CH}_2\text{-O-OC-}R^2$ I

wobei

$R^1$ und $R^2$ unabhängig voneinander jeweils eine Gruppe $-(A^1\text{-}Z)_m\text{-}(A^2)_n\text{-}Y$ bedeuten,

worin

$A^1$ und $A^2$ jeweils unabhängig voneinander eine 1,4-Phenylen-, Pyrimidin-2,5-diyl-, 1,4-Cyclohexylen-, 1,3-Dioxan-2,5-diyl-, 1,4-Dithian-2,5-diyl oder 1,4-Bicyclo(2,2,2)-octylen-Gruppe, wobei diese auch ein- oder mehrfach substituiert sein kann durch F, Cl, Br, CN und/oder Alkylgruppen mit bis zu 12 C-Atomen, wobei in den Alkylgruppen 1 oder 2 nicht benachbarte $CH_2$-Gruppen durch O-Atome ersetzt sein können,

Z -CO-O-, -O-CO-, $-CH_2CH_2-$, $-OCH_2-$, $-CH_2O-$-CH=N-, -N=CH-, -N=N-, -N(O)=N- oder eine Einfachbindung,

m und n jeweils unabhängig voneinander 0, 1 oder 2 und

Y eine geradkettige oder verzweigte Alkylgruppe mit bis zu 12 C-Atomen, wobei 1 oder 2 nicht benachbarte $CH_2$-Gruppen durch O-Atome ersetzt sein können, oder falls n 1 oder 2 ist, auch F, Cl, Br oder CN

bedeuten, und

$R^0$ eine Alkylgruppe mit 1-5 C-Atomen, unsubstituiertes oder substituiertes $(C_6\text{-}C_{18})$-Aryl oder unsubstituiertes oder substituiertes $(C_5\text{-}C_{12})$-Cycloalkyl ist.

Weiter enthält die Dotierkomponente bevorzugt mindestens einen chiralen Dotierstoff mit 2 Chiralitätszentren.

Die erfindungsgemäßen Flüssigkristallmedien enthalten bevorzugt 2-60 achirale Flüssigkristallverbindungen. Dabei enthalten die Medien insbesondere 10-60 % achirale Flüssigkristallverbindungen, ausgewählt aus den Klassen der Azoxybenzole, Benzylidenaniline, Biphenyle, Terphenyle, Phenyl- oder Cyclohexylbenzoate, Cyclohexan-carbonsäurephenyl-oder Cyclohexyl-ester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4′-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenylcyclohexyl)ethane, 1-Cyclohexyl-2-biphenylylethane, 1-Phenyl-2-cyclohexylphenylethane, 1-Cyclohexylcyclohexyl-2-phenylethane, halogenierte Stilbene, Benzylphenylether, Tolane und substituierte

Zimtsäuren.

Gegenstand der Erfindung sind weiter erfindungsgemäße Flüssigkristallmedien enthaltende STN-Flüssigkristallanzeigen sowie die Verwendung der erfindungsgemäßen Flüssigkristallmedien in STN-Flüssigkristallanzeigen.

Die Temperaturabhängigkeit des d/p-Fensters wird bevorzugt in einer hierfür geeigneten Testzelle ermittelt. Bevorzugt ist die Verwendung einer durch Spacer erzeugten keilförmigen Elektrodenanordnung (Keilzelle), die in Fig. 1 gezeigt ist. Diese ist mit einem eine Dotierkomponente enthaltenden flüssigkristallinen Medium gefüllt, das einen bestimmten Pitch p aufweist. Falls die HTP der Dotierkomponente nicht bekannt ist, kann diese nach dem in Mol. Cryst. Liq. Cryst. Letters, 6 (1988) 87 beschriebenen Verfahren bestimmt werden. In der Keilzelle stellt sich der gewünschte Twistwinkel $\phi$, im Bereich ⑤ ein (s. Fig. 1, ② b).

Im Bereich ⑦ kommt es bei angelegter Spannung zunächst zur Ausbildung der striped domains, ehe der Twistwinkel $\phi+\pi$ im Bereich ⑥ eingestellt wird. Im Bereich ④ wird die $\phi$-$\pi$-Domäne beobachtet.

Mit dieser Keilzellenanordnung ist das d/p-Fenster direkt meßbar. Ergänzt man die Anordnung durch eine Heizung, die z.B. durch Wärmestrahlung erfolgen kann, und einen Temperatursensor, etwa ein Thermoelement, kann man die Temperaturabhängigkeit des d/p-Fensters $\frac{d}{dT}$ ($\Delta\frac{d}{p}$) messen.

Es können aber auch offene Flachzellen mit parallel angeordneten Elektroden verwendet werden, deren Zellabstand d im 0,01 µm-Bereich definiert variiert werden kann und/oder die bei festem d mit flüssigkristallinen Medien mit unterschiedlicher Pitchlänge befüllt werden können.

Weiter können auch geschlossene Flachzellen (Displays) verwendet werden. Dabei kann z.B. ein Satz von Zellen benutzt werden, die mit dem gleichen flüssigkristallinen Medium befüllt sind, wobei sich jedoch der Zerfallabstand d von Zelle zu Zelle um einen kleinen Betrag Δd, der insbesondere in der Nähe von $(d/p)_{max}$ oder $(d/p)_{min}$ z.B. Δd = 0,02 µm beträgt, ändert. Aus Praktikabilitätsgründen ist jedoch i.a. die Verwendung einer Keilzelle oder einer offenen Flachzelle bevorzugt. Aus diesem Grund soll der Terminus Testzelle hier auch nur für die Keilzelle oder die offene Flachzelle verwendet werden.

Im allgemeinen ist $\frac{d}{dT}$ ($\Delta \frac{d}{p}$) < O, d.h. das d/p-Fenster wird mit steigender Temperatur schmaler. Der Punkt, an dem das d/p-Fenster verschwindet, soll als Koaleszenzpunkt mit der Temperatur $T_K$ bezeichnet werden.

Die erfindungsgemäßen flüssigkristallinen Medien enthalten einen oder mehrere Dotierstoffe, die so gewählt sind, daß die in einer Testzelle gemessene Temperaturabhängigkeit des d/p-Fensters möglichst klein ist Bevorzugt sind solche Medien, für die im Temperaturintervall zwischen 20 °C und 60 °C

$$\frac{\Delta\ (\Delta\ \frac{d}{p})}{\Delta T} < 5 \cdot 10^{-3}\ K^{-1},$$

insbesondere jedoch < 2 • $10^{-3}$ $K^{-1}$ und ganz besonders < 1 • $10^{-3}$ $K^{-1}$ ist.

Die Temperatur des Koaleszenzpunktes $T_K$ ist bevorzugt größer als 60 °C, insbesondere > 70 °C und ganz besonders > 80 °C. $T_K$ ist weiter bevorzugt größer als der Klärpunkt $T_C$ des flüssigkristallinen Mediums, so daß im gesamten flüssigkristallinen Phasenbereich ein d/p-Fenster existiert.

Der d/p-Wert der erfindungsgemäßen flüssigkristallinen Medien sowie die Temperaturabhängigkeit dieses Werts, der durch die Temperaturabhängigkeit des Pitches p gegeben ist, müssen möglichst optimal an die Temperaturabhängigkeit des d/p = Fensters $\frac{d}{dT}$ ($\frac{d}{p}$) und die der oberen und unteren Grenze $\frac{d}{dT}$ $(\frac{d}{p})_{max}$ und $\frac{d}{dT}$ $(\frac{d}{p})_{min}$ angepaßt werden.

Eine Anpassung, bei der sich der d/p-Wert des Mediums im gesamten Existenzbereich des d/p-Fensters größtmöglich von $(d/p)_{max}$ und $(d/p)_{min}$ unterscheidet, ist bevorzugt. Weiterhin liegt eine bevorzugte Anpassung vor, wenn der d/p-Wert des flüssigkristallinen Mediums bei Raumtemperatur innerhalb des d/p-Fenstes bei dieser Temperatur liegt und bei der Temperatur des Koaleszenzpunktes $T_K$ möglichst wenig vom d/p-Wert des Koaleszenzpunktes abweicht. Flüssigkristalline Medien, bei denen die Abweichung

$$\delta = (\frac{d}{p})_{M,T_K} - (\frac{d}{p})_{KP}$$

zwischen -0,1 und +0,1 liegt, sind bevorzugt (M = Medium, KP = Koaleszenzpunkt). Besonders bevorzugt sind Abweichungen $\delta$, für die gilt $\delta < |0{,}05|$ und ganz besonders solche mit $\delta < |0{,}03|$. Die Temperatur, bei

der der d/p-Wert des Mediums kleiner als $(d/p)_{min}$ oder größer als $(d/p)_{max}$ ist, ist vorzugsweise größer als 60 °C, insbesondere jedoch größer als 80 °C.

Die Dotierkomponente kann einen oder mehrere chirale Dotierstoffe enthalten. Enthält sie nur 1 Dotierstoff, ist die Temperaturabhängigkeit des Pitches des Mediums gemäß (1) durch die Temperaturabhängigkeit HTP des Dotierstoffes in dem Medium gegeben. Dabei sind solche Dotierstoffe bevorzugt, die eine mittlere Temperaturabhängigkeit der HTP im Temperaturintervall zwischen 20 °C und 60 °C von

$$\frac{\Delta HTP}{\Delta T} < 5 \cdot 10^{-1}\ \mu m^{-1}\ K^{-1},$$

insbesondere jedoch $< 2 \cdot 10^{-1}\ \mu m^{-1}\ K^{-1}$ und ganz besonders $< 1 \cdot 10^{-2}\ \mu m^{-1}\ K^{-1}$ aufweisen.

Bei der Übertragung der in Keilzellen und/oder offenen Flachzellen erhaltenen Meßwerte für $\Delta d/p$, $(d/p)_{max}$, $(d/p)_{min}$ und/oder $\frac{d}{dT}(\Delta d/p)$ auf geschlossene Flachzellen (Displays) muß berücksichtigt werden, daß der Zellabstand in geschlossenen Flachzellen temperaturabhängig ist $d = d(T)$ und größenordnungsmäßig z.B. etwa bei einer Temperaturerhöhung um 20 °C um

$$\frac{\Delta d}{d_0} = 0{,}015$$

zunimmt.

Es sind insbesondere für geschlossene Flachzellen solche Dotierstoffe bevorzugt, für die

$$\varepsilon = \left| \frac{d\left(\frac{d(T)}{do}\right)}{dT} + \frac{d\left(\frac{HTP(T)}{HTPo}\right)}{dT} \right| < 0{,}01\ K^{-1},$$

insbesondere jedoch $\epsilon < 5 \cdot 10^{-3}\ K^{-1}$ und ganz besonders $\epsilon < 1 \cdot 10^{-3}\ K^{-1}$ ist.

Bei einer Verwendung mehrerer, z.B. von 2 chiralen Komponenten, ergibt sich der Kehrwert des insgesamt eingestellten Pitchs p häufig durch eine Linearkombination der Beiträge der einzelnen Komponenten, z.B.

$$\frac{1}{p} = HTP_1 C_1 + HTP_2 C_2 \quad (2)$$

wobei der Index die beiden verschiedenen Komponenten kennzeichnet. Die Temperaturabhängigkeit von p wird durch die Temperaturabhängigkeit der HTP der beiden Dotierstoffe bestimmt und kann durch Variation der Dotierstoffe und deren Konzentration an die Temperaturabhängigkeit des d/p-Fensters angepaßt werden.

Chirale Dotierstoffe der Formel I

$R^1$-CO-O-CHR$^0$-$CH_2$-O-OC-$R^2$ I

worin $R^1$, $R^2$, $A^1$, $A^2$, Z, m, n, Y und $R^0$ die oben angegebene Bedeutung haben, sind bevorzugt. Besonders bevorzugte Verbindungen der Formel I sowie Verfahren zu ihrer Herstellung sind in DE 35 23 185 beschrieben.

Die chiralen Dotierstoffe können ein oder auch mehrere Chiralitätszentren aufweisen. Bevorzugt sind solche Dotierkomponenten, bei denen mindestens ein chiraler Dotierstoff 2 Chiralitätszentren aufweist. Ganz besonders bevorzugt sind solche chiralen Komponenten, die das Strukturelement II aufweisen,

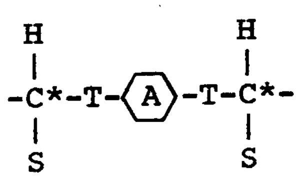

II

worin

S jeweils unabhängig voneinander eine Alkyl- oder Alkoxygruppe mit 1-5 C-Atomen, CN oder Halogen,

T jeweils unabhängig voneinander -O-, -COO-, -OOC-, $-CH_2CH_2-$ oder eine Einfachbindung, und

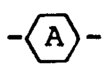

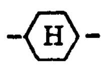, 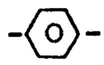, 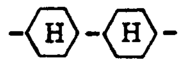, 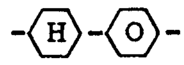 oder 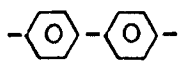

bedeuten.

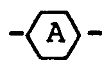

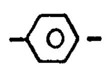, 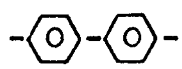 oder 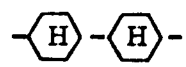,

ist bevorzugt insbesondere jedoch

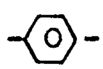 oder 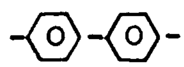.

S ist bevorzugt $CH_3$-, $CH_3$-$CH_2$, Cl oder CN und ganz besonders bevorzugt $CH_3$-, Cl oder CN.

Die erfindungsgemäßen nematischen flüssigkristallinen Medien enthalten vorzugsweise 2-10, insbesondere 4-30 und ganz besonders bevorzugt 7-25 achirale Flüssigkristallverbindungen. Diese weiteren Bestandteile werden vorzugsweise ausgewählt aus nematischen (monotropen) oder isotropen Verbindungen, wobei Verbindungen, ausgewählt aus den oben aufgeführten Verbindungsklassen, bevorzugt sind. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

R'-L-E-R" 1

R'-L-COO-E-R" 2

R'-L-OOC-E-R" 3

R'-L-$CH_2CH_2$-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Rest L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und

-G-Cyc-.

R′ und R″ bedeuten in einer bevorzugten Untergruppe der Verbindungen der Formeln 1, 2, 3, 4 und 5 jeweils unabhängig voneinander Alkyl, Alkenyl, Alkoxy, Alkenyloxy oder Alkanoyloxy mit bis zu 8 Kohlenstoffatomen (Gruppe 1). Bei den meisten dieser Verbindungen sind R′ und R″ voneinander verschieden, wobei einer dieser Reste meist Alkyl oder Alkenyl ist. In einer weiteren bevorzugten Untergruppe der Verbindungen der Formeln 1, 2, 3, 4 und 5 bedeutet R″ -CN, $-CF_3$, $-OCF_3$, F, Cl oder -NCS; R hat dabei die bei den Verbindungen der Gruppe 1 angegebene Bedeutung und ist vorzugsweise Alkyl oder Alkenyl (Gruppe 2). Aber auch andere Varianten der vorgesehenen Substituenten in den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäßen Medien enthalten vorzugsweise neben Komponenten aus der Gruppe 1 auch Komponenten aus der Gruppe 2, deren Anteile vorzugsweise wie folgt sind:

Gruppe 1: 20 bis 90 %, insbesondere 30 bis 90 %,
Gruppe 2: 10 bis 80 %, insbesondere 10 bis 50 %.

Die erfindungsgemäßen Flüssigkristallmischungen werden bevorzugt in STN-Flüssigkristallanzeigen verwendet, die Twistwinkel $\phi \geqq \pi/2$ aufweisen. Derartige STN-Flüssigkristallanzeigen zeichnen sich im Vergleich zu Standard-TN-Flüssigkristallanzeigen mit $\phi \simeq \pi/4$ durch eine wesentlich bessere Steilheit der elektrooptischen Kennlinie und damit verbunden durch bessere Kontrastwerte sowie durch eine wesentlich geringere Blickwinkelabhängigkeit des Kontrastes aus. STN-Flüssigkristallanzeigen sind z.B. beschrieben in EP 0 131 216 B1; DE 34 23 993 Al; EP 0 098 070 A2; M. Schadt und F. Leenhouts, 17. Freiburger Arbeitstagung Flüssigkristale (08.-10.04.87); K. Kawasaki et al., SID 87 Digest 391 (20.06.); M. Schadt und F. Leenhouts, SID 87 Digest 372 (20.01.); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984); M. Schadt und F. Leenhouts, Appl. Phys. Lett. 50 (5), 236 (1987); E.P. Raynes, Mol. Cryst. Liq. Cryst. Letters Vol. 4 (1), pp. 1-8 (1986); C.M. Waters et al., Proc. Soc. Inf. Disp. (New York (1985) (3rd Intern. Display Conference, Kobe, Japan); DE OS 35 03 259; T.J. Scheffer und J. Nehring, Appl. Phys. Lett. 45 (1984) 1021; M. Schadt und F. Leenhouts, Appl. Phys. Lett. 50 (1987), 236; EP OS 0 246 842; K. Kawasaki et al., SID 87 Digest 391 (20.06.).

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vergleichsbeispiel I

Einer flüssigkristallinen Basismischung, bestehend aus
5 % 4-(trans-4-Ethylcyclohexyl)-benzonitril
15 % 4-(trans-4-Propylcyclohexyl)-benzonitril
11 % 4-(trans-4-Butylcyclohexyl)-benzonitril
21 % 4-(trans-4-Pentylcyclohexyl)-benzonitril
11 % 4-(trans-4-Heptylcyclohexyl)-benzonitril
5 % 4-(trans-4-Propylcyclohexyl)-ethylbenzol
12 % 4'-(trans-4-Propylcyclohexyl)-4-ethyl-biphenyl
10 % 4'-(trans-4-Pentylcyclohexyl)-4-ethyl-biphenyl
4 % 4'-(trans-4-Propylcyclohexyl)-4-(trans-4-propylcyclohexyl)-biphenyl
6 % 4'-(trans-4-Pentylcyclohexyl)-4-(trans-4-propylcyclohexyl)-biphenyl
werden chirale Dotierstoffe zugesetzt, die aus der C1 und C2 umfassenden Gruppe ausgewählt werden:

C1: (S)-4-((1-Methyl-heptyl)-oxy-carbonyl)-phenyl-4-hexoxy-benzoat
C2: (S)-1,2,-Bis-(4-(trans-4-pentylcyclohexyl)benzoyl-oxy)-1-phenyl-ethan.

Tabelle 1

| Beispiel | Experiment | Konzentration der Dotierstoffe [%] |
|---|---|---|
| Vergleichsbeispiel 1 | 1.1 | 1 % (C1) |
| Beispiel 1 | 1.2 | 0,305 % (C2) |
| Beispiel 2 | 1.3 | 0,10 % (C1) + 0,28 % (C2) |

Die Temperaturabhängigkeit des d/p-Fensters wurde in einer Keilzelle bestimmt, wie dies in Fig. 1 skizziert ist. Die Meßergebnisse sind in den folgenden Tabellen 2-4 zusammengefaßt. Der optimale d/p-Wert $(d/p)_{opt}$ bezieht sich auf eine Zelle, die mit dem jeweiligen dotierten Medium gefüllt ist und eine Dicke von d = 6,5 µm aufweist.

Tabelle 2

| Ergebnisse des Experiments 1.1 | | | | | |
|---|---|---|---|---|---|
| | T [°C] | | | | |
| | 20 | 27 | 37 | 51 | 70 |
| $(d/p)_{min}$ | - | 0,48 | 0,48 | 0,52 | 0,49 |
| $(d/p)_{max}$ | - | 0,80 | 0,81 | 0,81 | 0,72 |
| $\Delta d/p$ | - | 0,32 | 0,33 | 0,29 | 0,23 |
| $(d/p)_{opt}$ | 0,67 | - | 0,65 | 0,65 | 0,64 |

Tabelle 3

| Ergebnisse des Experiments 1.2 | | | | | |
|---|---|---|---|---|---|
| | T [°C] | | | | |
| | 20 | 25 | 41 | 48 | 70 |
| $(d/p)_{min}$ | - | 0,56 | 0,56 | 0,63 | 0,57 |
| $(d/p)_{max}$ | - | 0,82 | 0,83 | 0,83 | 0,79 |
| $\Delta d/p$ | - | 0,26 | 0,27 | 0,20 | 0,22 |
| $(d/p)_{opt}$ | 0,67 | - | 0,68 | 0,68 | 0,66 |

Tabelle 4

| Ergebnisse des Experiments 1.3 | | | | |
|---|---|---|---|---|
| | T [°C] | | | |
| | 25 | 39 | 50 | 73 |
| $(d/p)_{min}$ | 0,56 | 0,56 | 0,58 | 0,61 |
| $(d/p)_{max}$ | 0,81 | 0,81 | 0,81 | 0,82 |
| $\Delta d/p$ | 0,25 | 0,25 | 0,23 | 0,21 |
| $(d/p)_{opt}$ | 0,68 | 0,68 | 0,68 | 0,68 |

Die Meßergebnisse sind in Fig. 2 graphisch dargestellt. Die extrapolierten Koaleszenzpunkte der jeweiligen Mischungen sind in Tabelle 5 zusammengestellt:

Tabelle 5

| Koaleszenzpunkte | |
|---|---|
| Experiment | Temperatur des Koaleszenzpunktes $T_K$ (°C) |
| 1.1 | 170 |
| 1.2 | 260 |
| 1.3 | 310 |

## Patentansprüche

1. Nematisches flüssigkristallines Medium mit positiver dielektrischer Anisotropie enthaltend eine oder mehrere achirale Flüssigkristallverbindungen und eine Dotierkomponente aus einem oder mehreren Dotierstoffen zur Verwendung in STN-Displays, dadurch gekennzeichnet, daß die Dotierkomponente so gewählt wird, daß das Medium bei Verwendung in einer zur Ermittlung des d/p-Fensters $\Delta$ [d/p(T)] geeigneten Testzelle
   - eine Temperaturabhängigkeit des d/p-Fensters d[$\Delta$(d/p)]dT aufweist, welche im Temperaturintervall zwischen 20 und 60 °C nicht größer als $1 \cdot 10^{-3}$K ist und die Koaleszenztemperatur $T_K$ zwischen oberer und unterer Grenze des d/p-Fensters mindestens 60 °C beträgt
     oder
   - eine Temperaturabhängigkeit d($\Delta$d/p)dT im Bereich von 20 °C bis 60 °C aufweist , die nicht größer als $2 \cdot 10^{-3}K^{-1}$ ist und die Koaleszenztemperatur mindestens 80 °C beträgt.

2. Medium nach Anspruch 1, dadurch gekennzeichnet, daß die Temperatur des Koaleszenzpunktes $T_K$ über dem Klärpunkt $T_C$ des Mediums liegt.

3. Medium nach mindestens einem der Ansprüche 1-2, dadurch gekennzeichnet, daß die Temperaturabhängigkeit der Helical Twisting Power HTP und die Konzentration des Dotierstoffs oder der Dotierstoffe so gewählt sind, daß die Temperaturabhängigkeit des $\frac{d}{p}$ -Werts des Mediums so an die Temperaturabhängigkeit des d/p-Fensters angepaßt ist, daß der d/p-Wert des Mediums beim gesamten Betriebstemperaturbereich innerhalb der Grenzen des d/p-Fensters liegt.

4. Medium nach mindestens einem der Ansprüche 1-3, dadurch gekennzeichnet, daß sich der d/p-Wert, den das Medium bei der Koaleszenztemperatur $T_K$ aufweist, vom d/p-Wert des Koaleszenzpunktes um höchstens +0.1 oder -0.1 unterscheidet und daß der d/p-Wert des Mediums bei Raumtemperatur innerhalb des d/p-Fensters bei dieser Temperatur liegt.

5. Medium nach mindestens einem der Ansprüche 1-4, dadurch gekennzeichnet, daß die Temperatur, bei der der d/p-wert des Mediums kleiner als $(d/p)_{min}$ oder größer als $(d/p)_{max}$ ist, größer als 60 °C ist.

6. Medium nach mindestens einem der Ansprüche 1-5, dadurch gekennzeichnet, daß als Dotierkomponente ein chiraler Dotierstoff mit einer mittleren Temperaturabhängigkeit der Helical Twisting Power $\Delta$HTP/$\Delta$T verwendet wird, die im Temperaturintervall zwischen 20 °C und 60 °C kleiner als $5 \cdot 10^{-1}$ $\mu m^{-1}$ $K^{-1}$ ist.

7. Medium nach mindestens einem der Ansprüche 1-6, dadurch gekennzeichnet, daß das Medium mindestens 2 chirale Dotierstoffe enthält.

8. Medium nach mindestens einem der Ansprüche 1-7, dadurch gekennzeichnet, daß mindestens ein chiraler Dotierstoff der Formel I verwendet wird.

   $R^1$-CO-O-CH$R^0$-$CH_2$-O-OC-$R^2$ I

   wobei $R^1$ und $R^2$ unabhängig voneinander jeweils eine Gruppe -($A^1$-Z)$_m$-($A^2$)$_n$-Y bedeuten,
   worin

| | |
|---|---|
| $A^1$ und $A^2$ | jeweils unabhängig voneinander eine 1,4-Phenylen-, Pyrimidin-2,5-diyl-, 1,4-Cyclohexylen-, 1,3-Dioxan-2,5-diyl-, 1,3-Dithian-2,5-diyl oder 1,4-Bicyclo(2,2,2)-octylen-Gruppe, wobei diese auch ein- oder mehrfach substituiert sein kann durch F, Cl, Br, CN und/oder Alkylgruppen mit bis zu 12 C-Atomen, wobei in den Alkylgruppen 1 oder 2 nicht benachbarte $CH_2$-Gruppen durch O-Atome ersetzt sein können, |
| Z | -CO-O-, -O-CO-, -$CH_2CH_2$-, -$OCH_2$-, -$CH_2O$-, -CH=N-, -N=CH-, -N=N-, -N(O)=N- oder eine Einfachbindung, |
| m und n | jeweils unabhängig voneinander 0, 1 oder 2 und |
| Y | eine geradkettige oder verzweigte Alkylgruppe mit bis zu 12 C-Atomen, wobei 1 oder 2 nicht benachbarte $CH_2$-Gruppen durch O-Atome ersetzt sein können, oder falls n 1 oder 2 ist, auch F, Cl, Br, oder CN |

   bedeuten, und

$R^0$ eine Alkylgruppe mit 1 - 5 C-Atomen, unsubstituiertes oder substituiertes ($C_6$-$C_{18}$)-Aryl oder unsubstituiertes oder substituiertes ($C_5$-$C_{12}$)-cycloalkyl ist.

**9.** Medium nach mindestens einem der Ansprüche 1-8 , dadurch gekennzeichnet, daß mindestens ein chiraler Dotierstoff 2 Chiralitätszentren aufweist.

**10.** Medium nach mindestens einem der Ansprüche 1-9 , dadurch gekennzeichnet, daß das Medium 2-60 actirale Flüssigkristallverbindungen enthält.

**11.** Medium nach Anspruch 10, dadurch gekennzeichnet, daß das Medium 10 %-60 % achirale Flüssigkristallverbindungen, ausgewählt aus den Klassen der Azoxybenzole, Benzylidenaniline, Biphenyle, Terphenyle, Phenyl- oder Cyclohexylbenzoate, Cyclohexan-carbonsäurephenyl- oder cyclohexyl-ester, Phenyl- oder Cyclohexyl-ester der Cyclohexylbenzoesäure, Phenyl- oder Cyclohexyl-ester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenylcyclohexyl)-ethane, 1-Cyclohexyl-2-biphenylylethane, 1-Phenyl-2-cyclohexylphenylethane, 1-Cyclohexylcyclohexyl-2-phenylethane,halogenierten Stilbene, Benzylphenylether, Tolane und substituierten Zimstäuren, enthält.

**12.** Supertwist-Flüssigkristallanzeige, dadurch gekennzeichnet, daß die Flüssigkristallanzeige ein Flüssigkristallmedium nach mindestens einem der Ansprüche 1-11 enthält.

**13.** Verwendung eines Flüssigkristallmediums nach mindestens einem der Ansprüche 1-11 in einer Supertwist-Flüssigkristallanzeige.

**14.** Verfahren zur Vergrößerung des Arbeitstemperaturbereichs einer Supertwist-Flüssigkristallanzeige, die ein nematisches flüssigkristallines Medium mit positiver dielektrischer Anisotropie enthält, welches eine oder mehrere achirale Flüssigkristallverbindungen und eine Dotierkomponente aus einem oder mehreren Dotierstoffen aufweist, dadurch gekennzeichnet, daß die Dotierkomponente so gewählt wird, daß

* das Medium bei Verwendung in einer zur Ermittlung von $\Delta[d/p(T)]$ geeigneten Testzelle eine geringe Temperaturabhängigkeit des d/p-Fensters $d[\Delta(d/p)]dT$ aufweist, welche im Temperaturintervall zwischen 20 und 60 °C kleiner als $2 \times 10^{-3}$ $K^{-1}$ ist und
* die Temperaturabhängigkeit der Helical Twisting Power und die Konzentration der Dotierstoffe so gewählt sind, daß die Temperaturabhängigkeit des d/p-Wertes des Mediums so an die Temperaturabhängigkeit des d/p-Fensters angepaßt ist, daß die Temperatur, bei der der d/p-Wert des Mediums kleiner als $(d/p)_{min}$ oder größer als $(d/p)_{max}$ ist, größer als 80 °C ist.

## Claims

**1.** Nematic liquid crystal medium of positive dielectric anisotropy containing one or more achiral liquid crystal compounds and a doping component comprising one or more doping substances for use in STN displays, characterized in that the doping component is chosen such that the medium, when used in a test cell suitable for determination of the d/p window $\Delta[d/p(T)]$

* has a temperature dependence of the d/p window $d[\Delta(d/p)]dT$ which is not greater than $1 \times 10^{-3}K$ in the temperature range between 20 and 60 °C, and the coalescence temperature $T_K$ between the upper and the lower limit of the d/p window is at least 60 °C or
* has a temperature dependence $d(\Delta d/p)dT$ in the range from 20 °C to 60 °C which is not greater than $2 \times 10^{-3}K^{-1}$, and the coalescence temperature is at least 80 °C.

**2.** Medium according to Claim 1, characterized in that the temperature of the coalescence point $T_K$ is above the clearing point $T_C$ of the medium.

**3.** Medium according to at least one of Claims 1 or 2, characterized in that the temperature dependence of the helical twisting power HTP and the concentration of the doping substance or the doping

substances are chosen such that the temperature dependence of the $\frac{d}{p}$ value of the medium is matched to the temperature dependence of the d/p window in such a way that the d/p value of the medium lies within the boundaries of the d/p window in the entire operating-temperature range.

**4.** Medium according to at least one of Claims 1-3, characterized in that the d/p value which the medium has at the coalescence temperature $T_K$ differs from the d/p value of the coalescence point by not more than +0.1 or -0.1 and in that the d/p value of the medium at room temperature lies within the d/p window at this temperature.

**5.** Medium according to at least one of Claims 1-4, characterized in that the temperature at which the d/p value of the medium is less than $(d/p)_{min}$ or greater than $(d/p)_{max}$ is greater than 60 °C.

**6.** Medium according to at least one of Claims 1-5, characterized in that a chiral doping substance having an average temperature dependence of the helical twisting power $\Delta HTP/\Delta T$ of less than $5 \times 10^{-1}$ $\mu m^{-1}$ $K^{-1}$ in the temperature range between 20 °C and 60 °C is used as the doping component.

**7.** Medium according to at least one of Claims 1-6, characterized in that the medium contains at least two chiral doping substances.

**8.** Medium according to at least one of Claims 1-7, characterized in that at least one chiral doping substance of the formula I

$R^1$-CO-O-CH$R^0$-$CH_2$-O-OC-$R^2$ I

in which
$R^1$ and $R^2$ independently of one another are each a group

-($A^1$-Z)$_m$-($A^2$-)$_n$-Y,

wherein

$A^1$ and $A^2$ in each case independently of one another are a 1,4-phenylene, pyrimidine-2,5-diyl, 1,4-cyclohexylene, 1,3-dioxane-2,5-diyl, 1,3-dithiane-2,5-diyl or 1,4-bicyclo(2.2.2)-octylene group, it also being possible for this to be substituted by one or more substituents from the group comprising F, Cl, Br, CN and/or alkyl groups having up to 12 C atoms, and it being possible for 1 or 2 non-adjacent $CH_2$ groups in the alkyl groups to be replaced by O atoms,

Z is -CO-O-, -O-CO-, -$CH_2CH_2$-, -$OCH_2$-, -$CH_2O$-, -CH=N-, -N=CH-, -N=N-, -N(O)=N- or a single bond,

m and n in each case independently of one another are 0, 1 or 2 and

Y is a straight-chain or branched alkyl group having up to 12 C atoms, it being possible for 1 or 2 non-adjacent $CH_2$ groups to be replaced by O atoms, or if n is 1 or 2, also F, Cl, Br or CN,

and

$R^0$ is an alkyl group having 1-5 C atoms, unsubstituted or substituted ($C_6$-$C_{18}$)-aryl or unsubstituted or substituted ($C_5$-$C_{12}$)-cycloalkyl

is used.

**9.** Medium according to at least one of Claims 1-8, characterized in that at least one chiral doping substance contains 2 chirality centres.

**10.** Medium according to at least one of Claims 1-9, characterized in that the medium contains 2-60 achiral liquid crystal compounds.

**11.** Medium according to Claim 10, characterized in that the medium contains 10%-60% of achiral liquid crystal compounds selected from the classes of azoxybenzenes, benzylideneanilines, biphenyls, terphenyls, phenyl or cyclohexyl benzoates, phenyl or cyclohexyl cyclohexanecarboxylates, phenyl or cyclohexyl esters of cyclohexylbenzoic acid, phenyl or cyclohexyl esters of cyclohexylcyclohexanecarboxylic acid, cyclohexylphenyl esters of benzoic acid, cyclohexanecarboxylic acid or cyclohexylcyclohexanecarboxylic acid, phenylcyclohexanes, cyclohexylbiphenyls, phenylcyclohexylcyclohexanes, cyclohexylcyclohexanes, cyclohexylcylcohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclohexyldioxanes, phenyl- or cyclohexyl-1,3-dithianes, 1,2-diphenylethanes, 1,2-dicyclohexylethanes, 1-phenyl-2-cyclohexylethanes,1-cyclohexyl-2-(4-phenylcyclohexyl)-ethanes, 1-phenyl-2-cyclohexylphenylethanes, 1-cyclohexylcyclohexyl-2-phenylethanes, halogenated stilbenes, benzyl phenyl ethers, tolans and substituted cinnamic acids.

**12.** Supertwist liquid crystal display, characterized in that the liquid display contains a liquid crystal medium according to at least one of the Claims 1-11.

**13.** Use of a liquid crystal medium according to at least one of Claims 1-11 in a supertwist liquid crystal display.

**14.** Method of expanding the working temperature range of a supertwist liquid-crystal display containing a nematic liquid-crystalline medium having positive dielectric anisotropy, which medium comprises one or more achiral liquid-crystal compounds and a doping component comprising one or more doping substances, characterized in that the doping component is chosen such that

* the medium, when used in a test cell suitable for determining $\Delta[d/p(T)]$, has a low temperature dependence of the d/p window $d[\Delta(d/p)]dT$ which is less than $2\times10^{-3}K^{-1}$ in the temperature range between 20 and 60 °C, and
* the temperature dependence of the helical twisting power and the concentration of the doping substances are chosen such that the temperature dependence of the d/p value of the medium is adapted to the temperature dependence of the d/p window such that the temperature at which the d/p value of the medium is less than $(d/p)_{min}$ or greater than $(d/p)_{max}$ is greater than 80 °C.

**Revendications**

**1.** Milieu à cristaux liquides, à anisotropie diélectrique positive, contenant un ou plusieurs composés de type cristal liquide achiraux et un composant de dopage constitué d'un ou plusieurs dopants pour utilisation dans des afficheurs de type superenroulé (STN), caractérisé en ce que le composant de dopage est choisi de manière que le milieu, lorsqu'on l'utilise dans une cellule de contrôle appropriée à la détermination de la fenêtre d/p $\Delta$ [d/p(T)]

* présente-une dépendance de la fenêtre d/p $d[\Delta(d/p)]dT$ à l'égard de la température qui, dans l'intervalle de températures compris entre 20 et 60 °C, n'est pas supérieure à $1.10^{-3}$ K, et la température de coalescence $T_K$, entre la limite supérieure et la limite inférieure de la fenêtre d/p est d'au moins 60 °C, ou
* présente une dépendance à l'égard de la température $d(\Delta d/p)dT$ , dans la plage allant de 20 à 60 °C, qui n'est pas supérieure à $2.10^{-3}K^{-1}$, et la température de coalescence est d'au moins 80 °C.

**2.** Milieu selon la revendication 1, caractérisé en ce que la température du point de coalescence $T_K$ est supérieure au point de clarification $T_C$ du milieu.

**3.** Milieu selon au moins l'une des revendications 1 et 2, caractérisé en ce que la dépendance du pouvoir de torsion hélicoïdal HTP (Helical Twisting Power) à l'égard de la température et la concentration du dopant ou des dopants sont choisies de manière que la dépendance de la valeur d/p du milieu à l'égard de la température soit adaptée à la dépendance de la fenêtre d/p à l'égard de la température de manière que la valeur d/p du milieu dans toute la plage de températures de fonctionnement se situe dans les limites de la fenêtre d/p.

**4.** Milieu selon au moins l'une des revendications 1 à 3, caractérisé en ce que la valeur d/p que présente le milieu à la température de coalescence $T_K$ diffère d'au maximum +0,1 ou -0,1 de la valeur d/p du point de coalescence, et en ce que la valeur d/p du milieu à la température ambiante se situe dans la fenêtre d/p à cette température.

**5.** Milieu selon au moins l'une des revendications 1 à 4, caractérisé en ce que la température à laquelle la valeur d/p du milieu est inférieure à $(d/p)_{min}$ ou supérieure à $(d/p)_{max}$ est supérieure à 60 °C.

**6.** Milieu selon au moins l'une des revendications 1 à 5, caractérisé en ce que l'on utilise comme composant de dopage un dopant chiral ayant une dépendance moyenne du pouvoir de torsion hélicoidal, à l'égard de la température, ΔHTP/ΔT, dans l'intervalle de température, allant de 20 à 60 °C, qui est inférieure à $5.10^{-1}$ $\mu m^{-1}$ $K^{-1}$.

**7.** Milieu selon au moins l'une des revendications 1 à 6, caractérisé en ce que le milieu contient au moins deux dopants chiraux.

**8.** Milieu selon au moins l'une des revendications 1 à 7, caractérisé en ce que l'on utilise au moins un dopant chiral de formule I

$R^1$-CO-O-CH$R^0$-$CH_2$-O-OC-$R^2$ I

| | |
|---|---|
| $R^1$ et $R^2$ | représentant chacun, indépendamment l'un de l'autre, un groupe -($A^1$-Z)$_m$-($A^2$)$_n$-Ydans laquelle |
| $A^1$ et $A^2$ | représentent chacun, indépendamment l'un de l'autre, un groupe 1,4-phénylène, pyrimidine-2,5-diyle, 1,4-cyclohexylène, 1,3-dioxanne-2,5-diyle, 1,3-dithianne-2,5-diyle ou 1,4-bicyclo(2,2,2)octylène, ceux-ci pouvant également être une ou plusieurs fois substitués par F, C1, Br, CN et/ou par des groupes alkyle ayant jusqu'à 12 atomes de carbone, 1 ou 2 groupes $CH_2$ non contigus dans les groupes alkyle pouvant être remplacés par des atomes d'oxygène, |
| Z | représente -CO-O-, -O-CO-, -$CH_2CH_2$-, -O$CH_2$-, -$CH_2$O-, -CH = N-, -N = CH-, -N = N-, -N-(O) = N- ou une liaison simple, |
| m et n | représentent chacun, indépendamment l'un de l'autre, 0, 1 ou 2, et |
| Y | représente un groupe alkyle à chaîne droite ou ramifiée ayant jusqu'à 12 atomes de carbone, 1 ou 2 groupes $CH_2$ non contigus pouvant être remplacés par des atomes d'oxygène, ou, lorsque n est 1 ou 2, également F, Cl, Br ou CN, et |
| $R^0$ | est un groupe alkyle ayant de 1 à 5 atomes de carbone, un groupe aryle en $C_6$-$C_{18}$ substitué ou non substitué, ou un groupe cycloalkyle en $C_5$-$C_{12}$ substitué ou non substitué. |

**9.** Milieu selon au moins l'une des revendications 1 à 8, caractérisé en ce qu'au moins un dopant chiral présente 2 centres de chiralité.

**10.** Milieu selon au moins l'une des revendications 1 à 9, caractérisé en ce que le milieu contient 2-60 composés de type cristal liquide achiraux.

**11.** Milieu selon la revendication 10, caractérisé en ce que le milieu contient 10-60 % de composés de type cristal liquide achiraux choisis dans les classes des azoxybenzènes, benzylidène-anilines, biphényles, terphényles, benzoates de phényle ou cyclohexyle, cyclohexanecarboxylates de phényle ou cyclohexyle, esters phénylique et cyclohexylique de l'acide cyclohexylbenzoïque, esters phénylique et cyclohexylique de l'acide cyclohexylcyclohexanecarboxylique, esters cyclohexylphényliques des acides benzoïque, cyclohexanecarboxylique et cyclohexylcyclohexanecarboxylique, phénylcyclohexanes, cyclohexylbiphényles, phénylcyclohexylcyclohexanes, cyclohexylcyclohexanes, cyclohexylcyclohexènes, cyclohexylcyclohexylcyclohexènes, 1,4-bis-cyclohexylbenzènes, 4,4'-bis-cyclohexylbiphényles, phényl- ou cyclohexylpyrimidines, phényl- ou cyclohexylpyridines, phényl- ou cyclohexyldioxannes, phényl- ou cyclohexyl-1,3-dithiannes, 1,2-diphényléthanes, 1,2-dicyclohexyléthanes, 1-phényl-2-cyclohexyléthanes, 1-cyclohexyl-2-(4-phénylcyclohexyl)éthanes, 1-cyclohexyl-2-biphénylyléthanes, 1-phényl-2-cyclohexylphényléthanes, 1-cyclohexylcyclohexyl-2-phényléthanes, stilbènes halogénés, éthers benzylphényliques, tolanes et acides cinnamiques substitués.

**12.** Afficheur à cristaux liquides superenroulés, caractérisé en ce que l'afficheur à cristaux liquides contient un milieu à cristaux liquides selon au moins l'une des revendications 1 à 11.

**13.** Utilisation d'un milieu à cristaux liquides selon au moins l'une des revendications 1 à 11, dans un afficheur à cristaux liquides superenroulés.

**14.** Procédé pour l'extension d'une plage de températures de fonctionnement d'un afficheur à cristaux liquides superenroulés, contenant un milieu à cristaux liquides nématiques à anisotropie diélectrique positive, qui comporte un ou plusieurs composés de type cristal liquide achiraux et un composant de dopage constitué d'un ou plusieurs dopants, caractérisé en ce que le composant de dopage est choisi de manière que

* le milieu, lorsqu'on l'utilise dans une cellule de contrôle appropriée à la détermination de Δ[d/p-(T)], présente une faible dépendance de la fenêtre d/p d[Δ(d/p)]dT à l'égard de la température, qui, dans l'intervalle de températures compris entre 20 et 60 °C, est inférieure à $2x10^{-3}$ $K^{-1}$, et
* la dépendance du pouvoir de torsion hélicoïdal à l'égard de la température et la concentration des dopants sont choisies de manière que la dépendance de la valeur d/p du milieu à l'égard de la température soit adaptée à la dépendance de la fenêtre d/p à l'égard de la température de manière que la température, à laquelle la valeur d/p du milieu est inférieure à $(d/p)_{min}$ ou supérieure à $(d/p)_{max}$, soit supérieure à 80 °C.

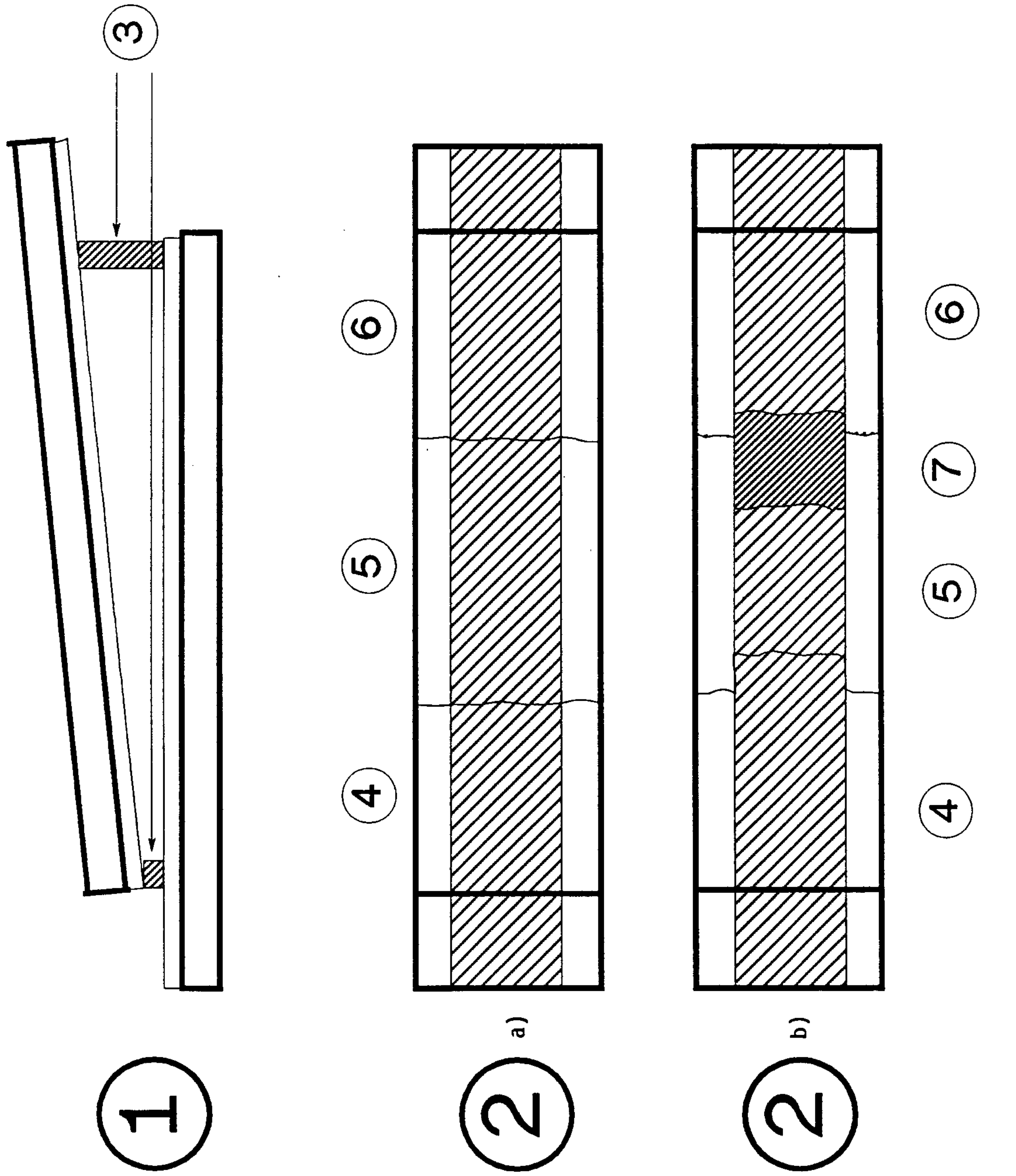


Fig. 1

Fig. 1 **Bestimmung des d/p-Fensters $\Delta \frac{d}{p}$ (T) in einer Keilzelle (schematisch; Heizvorrichtung ist nicht gezeigt)**

① Keilzelle (Seitanansicht)

② Keilzelle (Draufsicht)
a) keine Spannung angelegt
b) mit angelegter Spannung

③ Abstandshalter

④ Bereich mit Twistwinkel ( $\varphi - \pi$ )

⑤ Bereich mit Twistwinkel $\varphi$

⑥ Bereich mit Twistwinkel ( $\varphi + \pi$ )

⑦ "striped domains"

Fig. 2

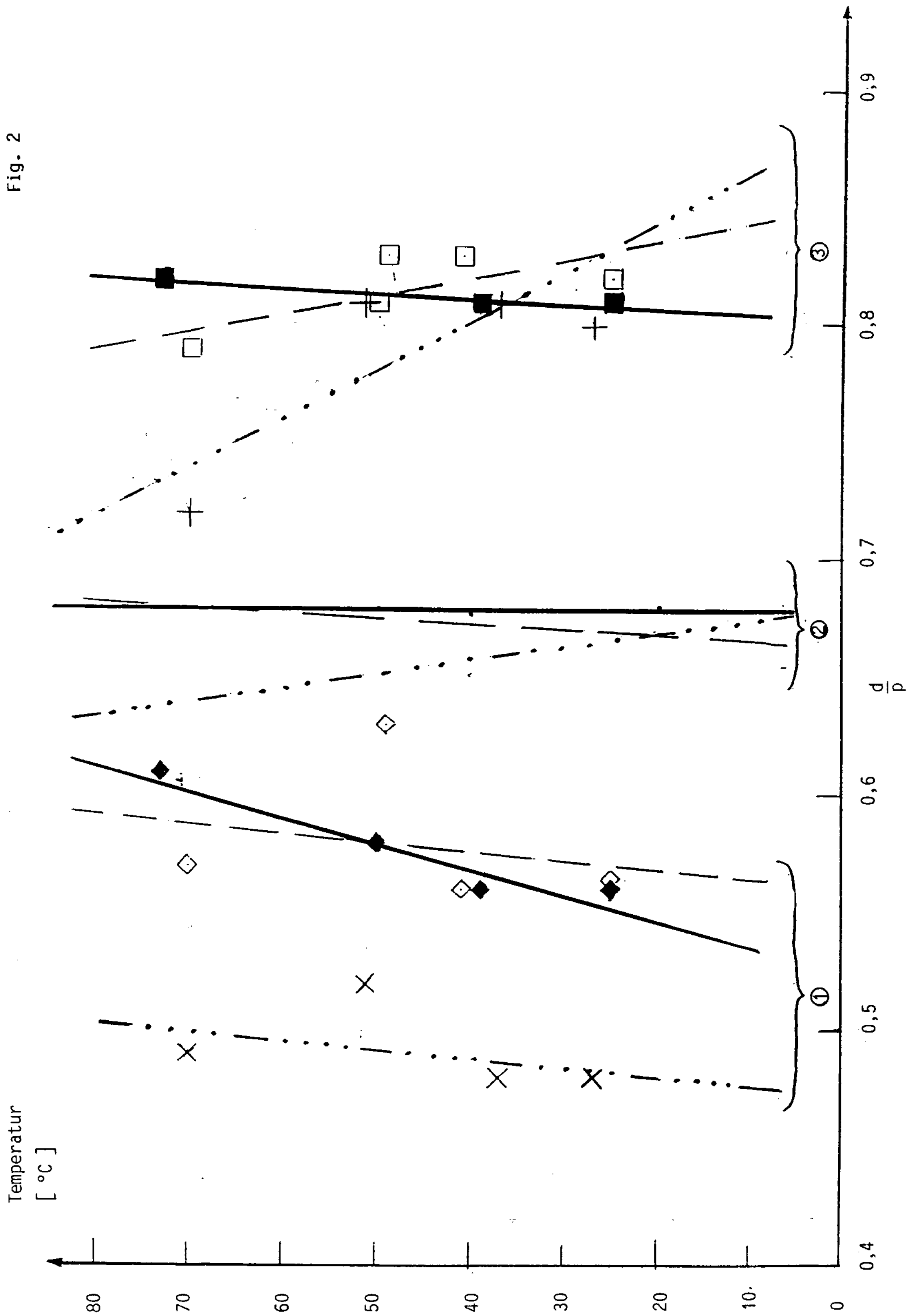

Fig. 2: Temperaturabhängigkeit von $\frac{d}{p}$ und $\Delta\frac{d}{p}$

① $\left(\frac{d}{p}\right)_{min}$ als Funktion der Temperatur (X, ◇ , ◆ )

② optimales $\left(\frac{d}{p}\right)_{opt}$ als Funktion der Temperatur

③ $\left(\frac{d}{p}\right)_{max}$ als Funktion der Temperatur (+, □ , ■ )

Experiment 1.1 -•-•-

Experiment 1.2 -----

Experiment 1.3 ——